(19) Europäisches Patentamt / European Patent Office / Office européen des brevets

(11) **EP 2 418 261 A1**

(12) **EUROPEAN PATENT APPLICATION**
published in accordance with Art. 153(4) EPC

(43) Date of publication:
**15.02.2012 Bulletin 2012/07**

(21) Application number: **10761516.3**

(22) Date of filing: **26.02.2010**

(51) Int Cl.:
*C09J 7/02* (2006.01)      *B32B 27/36* (2006.01)
*C09J 11/06* (2006.01)     *C09J 133/04* (2006.01)

(86) International application number:
**PCT/JP2010/053121**

(87) International publication number:
**WO 2010/116814 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.04.2009 JP 2009096405**

(71) Applicant: LINTEC Corporation
Tokyo 173-0001 (JP)

(72) Inventors:
• IWABUCHI, Hiroaki
Tokyo 173-0001 (JP)

• MUROI, Takashi
Tokyo 173-0001 (JP)
• SONE, Kazue
Tokyo 173-0001 (JP)
• YOSHII, Risa
Tokyo 173-0001 (JP)
• MATSUO, Natsuki
Tokyo 173-0001 (JP)

(74) Representative: **Stolmár Scheele & Partner**
**Blumenstraße 17**
**80331 München (DE)**

(54) **PRESSURE-SENSITIVE ADHESIVE SHEET AND PRESSURE-SENSITIVE ADHESIVE LABEL USING SAME**

(57)    PROBLEM

Provided is a means which is capable of furnishing such aesthetic property as attracts further more consumer's/purchaser's eyes to a joining surface of a printed layer or the like, or an adherend of a container or the like, in a pressure-sensitive adhesive sheet which may be used in an over-lamination application or a pressure-sensitive adhesive label application.

SOLUTION

A pressure-sensitive adhesive sheet of the present invention has a first sheet-like substrate comprised of a multi-layered laminated polyester film, and a first pressure-sensitive adhesive layer, arranged on one surface of the first sheet-like substrate, containing a pressure-sensitive adhesive agent, and having a yellowness degree measured by JIS K7105-1981 of 3.0 or lower.

FIG.3

EP 2 418 261 A1

**Description**

TECHNICAL FIELD

The present invention relates to a pressure-sensitive adhesive sheet and a pressure-sensitive adhesive label using the same.

BACKGROUND ART

Conventionally, a label-type or a sticker-type pressure-sensitive adhesive sheet has been used widely for various objects. As one of these pressure-sensitive adhesive sheets, there is, for example, a pressure-sensitive adhesive sheet for over-lamination (for example, refer to PATENT LITERATURE 1). This pressure-sensitive adhesive sheet for over-lamination is used by being over-laminated onto a joining surface of a printed layer or the like. Thereby, a joining surface of the printed layer or the like is protected, or depending on the case, aesthetic property such as high-grade sense or glossy feeling is also provided to the joining surface. The pressure-sensitive adhesive sheet for over-lamination usually has a laminated composition of a substrate to exert such function as protection of the joining surface or furnishing aesthetic property to the joining surface, and a pressure-sensitive adhesive layer to bond a pressure-sensitive adhesive sheet itself to the joining surface.

Here, aesthetic property furnished to a joining surface by the pressure-sensitive adhesive sheet for over-lamination is determined mainly by color tone which a substrate composing the pressure-sensitive adhesive sheet has.

However, aesthetic property furnished by a substrate composing the pressure-sensitive adhesive sheet for over-lamination which has conventionally been proposed is not the one to change when an over-laminated state is observed from various directions or angles. In addiction, for example, in the case where the joining surface is a printed layer, it is also not the one which has paid sufficient attention on influence given on color tone of the relevant printed layer.

On the contrary, if it is possible to furnish aesthetic property which attracts consumer' s/purchaser' s eyes for the relevant printed layer, by making stuck the pressure-sensitive adhesive sheet for over-lamination onto the printed layer of a label of various goods, it is very preferable in view of also marketing strategy of the relevant goods. A conventionally proposed pressure-sensitive adhesive sheet for over-lamination has many insufficient points in furnishing such aesthetic property for attracting consumer's/purchaser's eyes, and thus it is a present state that there is room for further improvement.

In addition, as applications of the pressure-sensitive adhesive sheet other than an over-lamination application, what is called a general pressure-sensitive adhesive label application has been known, and in particular, there is also such an application as a pressure-sensitive adhesive label stuck onto the exterior surface of a transparent container of a bottle form such as for cosmetics or beverage. Here, in a general pressure-sensitive adhesive label, furnishing of aesthetic property is performed by providing the printed layer at the front layer of a substrate. However, also in the pressure-sensitive adhesive sheet used in the relevant pressure-sensitive adhesive label application, it is not such one that aesthetic property thereof changes, when an laminated body is observed, after the label is stuck, from various directions or angles, similarly as described above.

On the contrary, when it is possible to furnish aesthetic property which attracts consumer's/purchaser's eyes for a container, by making stuck the pressure-sensitive adhesive label onto the container of various goods (for example, cosmetics or beverage), it is also very preferable in view of marketing strategy of the relevant goods. In this way, also in the pressure-sensitive adhesive sheet for a pressure-sensitive adhesive label application, there are many insufficient points in furnishing such aesthetic property as attracts consumer's/a purchaser' eyes, and thus it is a present state that threre is room for further improvement.

PRIOR ART LITERATURE

PATENT LITERATURE

PATENT LITERATURE 1: JP-A-2004-83837

SUMMARY OF INVENTION

PROBLEM TO BE SOLVED BY THE INVENTION

Accordingly, it is an object of the present invention to provide a means which is capable of furnishing such aesthetic property as attracts furthermore consumer' s/purchaser' s eyes to a joining surface of a printed layer or the like, or an adherend of a container or the like, in a pressure-sensitive adhesive sheet which may be used in an over-lamination application or a pressure-sensitive adhesive label application.

MEANS FOR SOLVING THE PROBLEM

The present inventors have intensively studied a way to solve the above-described problems. During that process, they have tried making a pressure-sensitive adhesive sheet having a composition laminated with a sheet-like substrate comprised of a multi-layered laminated polyester film and a pressure-sensitive adhesive layer, and finally found that the above problem can be solved by setting yellowness degree of the pressure-sensitive adhesive layer at a predetermined value or less, and have thus completed the present invention.

That is, the pressure-sensitive adhesive sheet of the present invention has a first sheet-like substrate comprised of a multi-layered laminated polyester film, and a first pressure-sensitive adhesive layer, arranged on one surface of the first sheet-like substrate, containing a pressure-sensitive adhesive agent, and having a yellowness degree measured by JIS K7105-1981 of 3.0 or lower.

ADVANTAGES OF THE INVENTION

According to the pressure-sensitive adhesive sheet of the present invention, such aesthetic property to attract further more consumer's/purchaser's eyes to a joining surface of a printed layer or the like or an adherend of a container or the like, can be furnished.

BRIEF DESCRIPTION OF THE DRAWINGS

Fig. 1 is a cross-sectional view of a pressure-sensitive adhesive sheet of a first embodiment of the present invention.
Fig. 2 is a graph showing measurement results of spectral reflectance in a wavelength range of 400 to 700 nm, on three kinds of multi-layered laminated polyester films, and a transparent single-layered polyester film.
Fig. 3 is a cross-sectional view of a lamination-type pressure-sensitive adhesive label, which is a second embodiment of the present invention.
Fig. 4 is a graph showing measurement results of spectral transmittance in a wavelength range of 400 to 700 nm, on three kinds of multi-layered laminated polyester films, and a transparent single-layered polyester film.

MODE FOR CARRYING OUT THE INVENTION

Explanation will be given below on embodiments of the present invention with reference to attached drawings. It should be noted that, in the explanation of the drawings, the same code was furnished to the same element, and duplicated explanation was omitted. In addiction, dimensional ratio of the drawings is exaggerated for explanation reason, and may differ from practical ratio.

[A first embodiment]

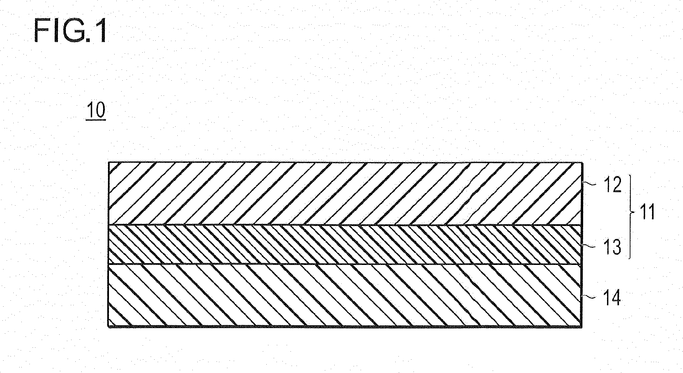

Fig. 1 is a cross-sectional view of a pressure-sensitive adhesive sheet of a first embodiment of the present invention. As shown in Fig. 1, a pressure-sensitive adhesive sheet 10 firstly has a pressure-sensitive adhesive sheet main body 11. This pressure-sensitive adhesive sheet main body 11 is made by lamination of a first sheet-like substrate 12 and a first pressure-sensitive adhesive layer 13. In the pressure-sensitive adhesive sheet 10 of the present embodiment, a release sheet 14 is further laminated onto the pressure-sensitive adhesive sheet main body 11. It should be noted that a wording of "a first" here is given for differentiation from a sheet-like substrate or a pressure-sensitive adhesive layer, as other member composing a lamination-type pressure-sensitive adhesive label, which is a second embodiment to be described later. Therefore, wording of "a first" or "a second" to be described later does not necessarily have itself meaning as an ordinal number.

In the embodiment shown in Fig. 1, the first sheet-like substrate 12 is composed of a multi-layered laminated polyester film (the multi-layered laminated structure is not shown) . The film has a structure where a layer comprised of polyester is laminated in multiple.

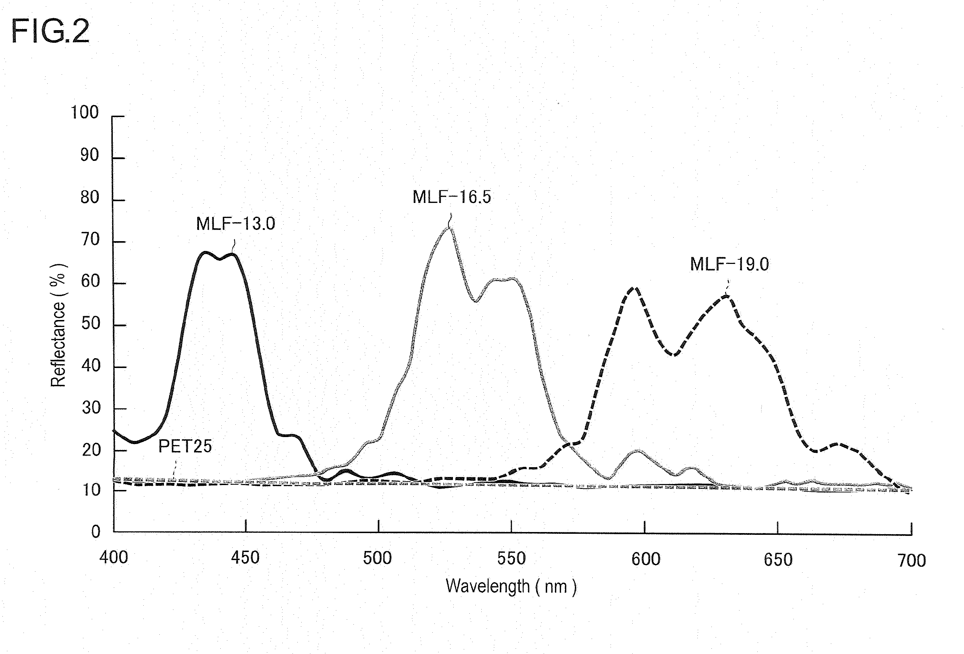

Thecompositionofthemulti-layeredlaminatedpolyester film composing the first sheet-like substrate 12 is described, for example, in JP-A-2005-59332. As the multi-layered laminated polyester film composing the first sheet-like substrate, a commercial product may be purchased and used, or the one produced by oneself may be used. As a commercial product of the multi-layered laminated polyester film, there is included ultra multi-layered film: Teijin (registered trade mark) Tetoron (registered trade mark) film MLF series, MLF-13.0, MLF-16.5 and MLF-19.0, sold by Teijin DuPont Films Japan Limited. Each of the MLF series has a reflection region at a different wavelength region. Fig. 2 is a graph showing measurement results of spectral reflectance in a wavelength range of 400 to 700 nm, on the above three kinds of commercial goods of the MLF series. As shown in Fig. 2, MLF-13.0 has a specific reflection region, with a reflectance of 30% or higher, at a wavelength of 400 to 480 nm; MLF-16.5 has a specific reflection region, with a reflectance of 30% or higher, at a wavelength of 480 to 580 nm; and MLF-19.0 has a specific reflection region, with a reflectance of 30% or higher, at a wavelength of 580 to 680 nm. It should be noted that use of commercial products other than these may also be allowed depending on the cases, of course.

As one example of a method for producing the relevant film by oneself, specifically, as described in JP-A-2005-59332, there is exemplified a method for alternately laminating two layers having different refractive index, which are composed of a polyester composition having different composition (hereafter, a layer having larger refractive index may also be referred to as "a first layer", and a layer having smaller refractive index may also be referred to as "a second layer") . Here, thickness of one layer of each of the first layer and the second layer is about 0.05 to 0.5 μm. In addition, total lamination number of the first layer and the second layer is, for example, about 11 to 300 layers, and preferably 100 to 200 layers. In addition, thickness of the first sheet-like layer 12 is preferably 6 to 100 μm, and more preferably 12 to 50 μm.

By changing thicknesses of the first layer and the second layer, it is possible to change wavelength showing a reflectance of 30% or higher, in the graph shown in Fig. 2. Specifically, by increasing thicknesses of the first layer and the second layer, it is possible to shift the region of wavelength showing a reflectance of 30% or higher, to a longer wavelength side. Specifically, in order to locate the region of a wavelength showing a reflectance of 30% or higher in the spectral reflectance curve in a range of wavelength 400 to 700 nm of multi-layered laminated polyester film, to a wavelength of 400 to 480 nm (blue), it is enough that thicknesses of the first layer and the second layer laminated alternately is set at about 60 to 70 nm. Similarly, in order to locate the region of a wavelength showing a reflectance of 30% or higher to a wavelength of 480 to 580 nm (green), it is enough that thicknesses of the first layer and the second layer laminated alternately is set at about 70 to 85 nm. Still more, in order to locate the region of a wavelength showing a reflectance of 30% or higher to a wavelength of 580 to 680 nm (red), it is enough that thicknesses of the first layer and the second layer laminated alternately is set at about 85 to 100 nm. These preferable thicknesses can be calculated from the following EXPRESSION 1, which come into effect for interference of reflected light of incident light to a thin film.

[EXPRESSION 1]

$$d = \frac{\lambda}{4n \cdot \cos\theta} \quad \text{or} \quad \lambda = 4n \cdot d \cdot \cos\theta$$

(wherein, d represents thickness (nm) of the thin film; n represents refractive index; λ represents wavelength (nm) where reflectance becomes high; and θ represents incident angle (angle from the normal line to the thin film) (°)).

In measurement of the above wavelength where reflectance becomes high, θ ≒ 0 (°) (that is cos θ ≒ 1), in the case of light injected from a direction along the normal line of the main film surface. In addition, because refractive index of polyester, which is a composition material of the multi-layered laminated film, is about 1.7, by substitution with these values in the above EXPRESSION 1, λ becomes nearly equal to 6. 8d. The above-mentioned preferable ranges of the thickness can be calculated from this EXPRESSION.

The first pressure-sensitive adhesive layer 13 contains a pressure-sensitive adhesive agent (not shown). The pressure-sensitive adhesive sheet 10 of the present embodiment has characteristics also in yellowness degree of the pressure-sensitive adhesive layer 13. Here, "yellowness degree" is also referred to as "yellowness index" and measured by JIS K7105-1981. It should be noted that a specific method for measuring yellowness degree is described in the section of EXAMPLES to be described later.

Specifically, in the present embodiment, yellowness degree of the first pressure-sensitive adhesive layer 13 is 3.0 or lower. Here, when the pressure-sensitive adhesive sheet 10 is used, the pressure-sensitive adhesive layer 13 is laminated so as to face to a printed surface as a joining surface (refer to the second embodiment to be described later), or an external surface of a container such as a container for accommodating liquid (refer to the third embodiment to be described later). In addition, after the lamination, patterns (characters/markings and the like) printed at the substrate surface, or a substance in the container is visually recognized in a form passing through the first sheet-like substrate 12 and the pressure-sensitive adhesive layer 13. In this case, when yellowness degree of the pressure-sensitive adhesive layer 13 is higher than 3.0, adverse influence could be given to color tone of the printed patterns of the printed layer, or color tone of the substance in the container. It should be noted that yellowness degree of the pressure-sensitive adhesive layer 13 is preferably 2.0 or lower, and more preferably 1.0 or lower. On the other hand, the lower limit value of the yellowness degree of the pressure-sensitive adhesive layer 13 is not especially limited, however, it is substantially becomes 0.1 or higher.

A specific composition of the pressure-sensitive adhesive agent contained in the pressure-sensitive adhesive layer 13 may be adopted without any limitation, as long as yellowness degree takes the above form. As one example of the pressure-sensitive adhesive agent contained in the pressure-sensitive adhesive layer 13, there is included the one containing a base polymer composed of a (meth)acrylate ester-type (co)polymer and a cross-linking agent. Here, as the (meth)acrylate ester composing the (meth)acrylate ester-type (co)polymer, there is included an ester composed of (meth) acrylic acid and a mono-alcohol, where an alkyl group possessed by the mono-alcohol is n-octyl group, isooctyl group, 2-ethylhexyl group, n-butyl group, isobutyl group, methyl group, ethyl group, isopropyl group or the like. It should be noted that the (meth) acrylate ester-type (co) polymer may contain one or more kind of these (meth)acrylate esters.

Ratio of a repeating unit derived from the above (meth)acrylate ester occupying in total repeating units of the (meth)acrylate ester-type (co)polymer, is preferably 30 to 99% by mole, and more preferably 50 to 95% by mole, relative to 100% by mole of total repeating units.

In addition, the (meth) acrylate ester-type (co) polymer may contain a repeating unit derived from a (meth) acrylic acid-type monomer having an organic functional group such as carboxyl group, hydroxyl group, glicidyl group, as a component other than the above. As such a component, (meth) acrylic acid, 2-hydroxyethyl (meth) acrylate, glicidyl (meth)acrylate or the like is included. Ratio of these repeating units occupying in total repeating units of the (meth) acrylate ester-type (co) polymer is preferably 0.01 to 15% by mole, and more preferably 0.3 to 10% by mole, relative to 100% by mole of total repeating units.

In order to enhance cohesion force of the pressure-sensitive adhesive agent, it is also possible to appropriately copolymerize vinyl acetate or methyl (meta)acrylate or the like, as a comonomer component.

In addition, in order to enhance tack strength, it is also possible to add a tackifier, and as one having small yellowness degree, a hydrogenated terpene resin or hydrogenated rosin or the like is included.

A cross-linking agent contained in the pressure-sensitive adhesive agent is also not especially limited. However, in view of providing the pressure-sensitive adhesive layer 13 satisfying the above requirement of the yellowness degree (yellowness index), an aliphatic isocyanate compound, an alicyclic isocyanate compound, an epoxy compound, or a metal chelating compound is used preferably as the cross-linking agent. These cross-linking agents may be used alone or two or more kinds in combination. It should be noted that cross-linking agents other than these may be used further in combination, as long as they do not give adverse influence on the effect of the present invention.

A specific form of the above various cross-linking agents is not especially limited, and conventionally known knowledge may be referred to appropriately. As an example of the cross-linking agents, there is include, as an aliphatic isocyanate compound, hexamethylene diisocyanate, or as an alicyclic isocyanate compound, isophorone diisocyanate, hydrogenated diphenylmethane diisocyanate, hydrogenated xylilene diisocyanate or the like. These isocyanate compounds may also be used in a biuret form, an isocyanurate form of the above compounds, and further, an adduct form, as a reaction product with a low molecular weight active hydrogen-containing compound such ethylene glycol, propylene glycol, neopentyl glycol, trimethylol propane, castor oilor the like. As the epoxy compound, N,N,N',N'-tetraglicidyl m-xylenediamine, polyethylene glycol diglicidyl ether, 1,3-bis(N,N-diglicidylaminomethyl)cyclohexane or the like is included. In addition, as the metal chelating agent, Aluminum tris acetyl acetonate, diisopropoxybis(acetylacetonato)titanium or the like is included.

Content of the cross-linking agent in the pressure-sensitive adhesive agent is not especially limited, however, it is preferably 0. 001 to 15 parts by mass, and more preferably 0.1 to 10 parts by mass, relative to 100% by mass of the above (meth)acrylate ester-type (co)polymer.

Thickness of the pressure-sensitive adhesive layer 13 is not especially limited, however, it is preferably 5 to 100 $\mu$m, and more preferably 15 to 50 $\mu$m, and it is set by selection appropriately depending on the size of concave-convex of the joining surface.

The release sheet 14 protects the pressure-sensitive adhesive layer 13 before using the pressure-sensitive adhesive sheet 10, and is a layer having function to prevent decrease in tackiness. In addition, the release sheet 14 is peeled off before the pressure-sensitive adhesive sheet 10 is used.

A specific form of the release sheet 14 is not especially limited, and conventionally known knowledge may be referred to appropriately. The release sheet 14 is generally composed by using a material, as a substrate, such as a filmof polyester, such as, polyethylene terephthalate, polybutylene terephthalate, polyethylene naphthalate; a plastic film, for example, a film of polyolefin such as polypropylene, polyethylene; and paper, such as, glassine paper, kraft paper, clay-coated paper. Thickness of these substrates is usually about 10 to 400 $\mu$m. In addition, at the surface of the release sheet 14, a layer (not shown) comprised of a releasing agent composed of a silicone resin or the like maybe provided to enhance releasing property of the pressure-sensitive adhesive layer 13. In the case where such a layer is provided, thickness of the layer is usually about 0.01 to 5 $\mu$m.

A production method of the pressure-sensitive adhesive sheet 10 of the present embodiment is not especially limited, and conventionally known method relating to production of the pressure-sensitive adhesive sheet may be referred to appropriately. As one example, such a method is used that a pressure-sensitive adhesive layer is formed by coating a pressure-sensitive adhesive agent onto the sheet-like substrate, and performing processing such as drying or thermal hardening. In the case of providing the release sheet, it may be enough to further adhere to the release sheet thereto. In addition, in the case of providing the release sheet, such a method may also be used that a pressure-sensitive adhesive layer is formed by coating a pressure-sensitive adhesive agent onto the release sheet in advance, and adhering the sheet-like substrate thereto.

According to the pressure-sensitive adhesive sheet 10 of the present embodiment, it becomes possible to furnish such aesthetic property as attracts further more consumer's/purchaser's eyes to an adherend, when peeling the release sheet 14 and laminating it onto a adherend. Specifically, it has become possible to furnish such astonishing function that visible color changes when viewing angle is changed. In more detail, it has been found that wavelength of visible light by reflection in the interface of a plurality of layers composing the multi-layered laminated polyester film, which composes the first sheet-like substrate, changes when viewing angle is changed (specifically, when incident angle to the normal line of the joining surface increases, wavelength of the reflected light shifts to a shorter wavelength side) and thus visible color is changed (refer to Examples to be described later).

In addition, although not shown in Fig. 1, a receiving layer for installing the printed layer or the printed character layer (it may be installed in a pressure-sensitive adhesive label application as will be described later) may also be provided on the top surface of the pressure-sensitive adhesive sheet 10 (upper surface of the first sheet-like substrate 12 in Fig. 1). The receiving layer is formed at the surface of the sheet-like substrate, aiming at enhancing adhesiveness to the sheet-like substrate of the printed layer or the printed character layer. As the receiving layer, acrylic-type resin, styrene-type resin, polyester-type resin, urethane-type resin, polyester-urethane-type resin, acryl-urethane-type resin, or the like may be used. As a method for forming the receiving layer, bar coat method, gravure coat method, knife coat method, die coat method, or the like may be used. It should be noted that, in view of reducing the risk of giving adverse influence on the effect of the present invention, it is preferable that the receiving layer is transparent.

The pressure-sensitive adhesive sheet of the present embodiment prepared in this way may be used as the pressure-sensitive adhesive label installed with the printed layer or the printed character layer. Such a pressure-sensitive adhesive label exerts an effect of changing original color tone of a stuck adherend, by viewing posture of an observer, by installing not printed patterns so as to become relatively wider. In addition, so as not to generate change of color tone of the printed layer, fixed expression can be transmitted to an observer. In this way, the pressure-sensitive adhesive label composed of the pressure-sensitive adhesive sheet of the present embodiment is attached to commercial goods to be able to provide the aesthetic property to attract consumer's/purchaser's eyes.

[A second embodiment]

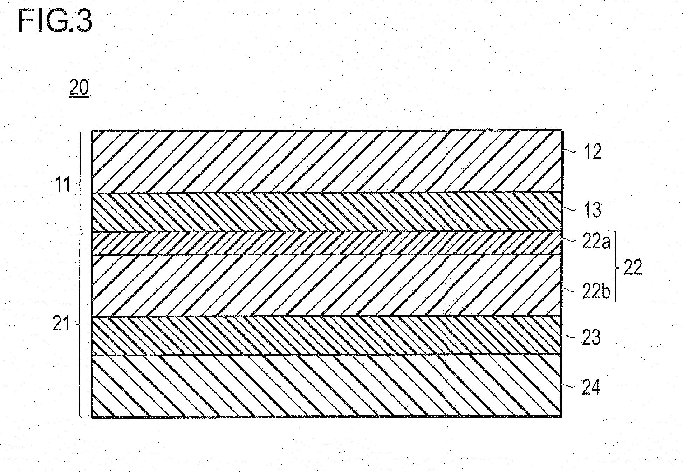

Fig. 3 is a cross-sectional view of a lamination-type pressure-sensitive adhesive label as a second embodiment of the present invention. As shown in Fig. 3, a pressure-sensitive adhesive label 20 has a composition laminated with a pressure-sensitive adhesive sheet for over-lamination 11 and a pressure-sensitive adhesive label main body 21. In the present embodiment, the pressure-sensitive adhesive sheet for over-lamination 11 is composed of the first sheet-like substrate 12 of the pressure-sensitive adhesive sheet 10 and the first pressure-sensitive adhesive layer 13 of the above first embodiment. In other words, a laminated body in a state that the release sheet 14 is peeled off from the pressure-sensitive adhesive sheet 10 shown in Fig. 1 corresponds to the pressure-sensitive adhesive sheet for over-lamination 11 shown in Fig. 3. On the other hand, in the present embodiment, the pressure-sensitive adhesive label main body 21 has a composition laminated with a second sheet-like substrate 22 composed of a printed layer 22a and a second sheet-like substrate main body 22b, a second pressure-sensitive adhesive layer 23 and a release sheet 24, in this order.

The present inventors have intensively studied further on the effect in the over-lamination application, and astonishingly found that the effect relating to the above aesthetic property (color changes when viewing angle is changed) is significantly expressed in the case where the underground layer of the pressure-sensitive adhesive sheet for over-lamination 11 is white. Accordingly, inapreferable embodiment of the second embodiment of the present invention, a pressure-sensitive adhesive label laminated with the above pressure-sensitive adhesive sheet onto the white underground layer (that is, used in an over-laminated application) is provided.

Among members composing the pressure-sensitive adhesive label main body 21, the second sheet-like substrate main body 22b, the second pressure-sensitive adhesive layer 23 and the release sheet 24 are not characteristic compositions of the present invention. Therefore, conventionally known knowledge may be referred to appropriately. For example, the second sheet-like substrate main body 22b is enough to be a sheet-like substrate having a first and a secondmain surfaces, and as a composition material thereof, there is included, for example, paper such as woodfree paper, coated paper; a film of plastic such as polyvinyl chloride, polystyrene, polyethylene terephthalate, polyethylene naphthalate, polypropylene, polyethylene; synthetic paper such as foamed polyethylene terephthalate, foamed polypropylene, or the like. Here, from the above reason, it is preferable that color of the second sheet-like substrate main body 22b is white. A method for making the second sheet-like substrate main body 22b white is not especially limited, however, there is included, for example, a method for installing a white coated layer (it may also has a role of the receiving layer) at the surface of the second sheet-like substrate, or the like, other than a method for making white the substrate itself (kneading of a white pigment, a foamed structure or the like). More specifically, as the sheet-like substrate having a white surface, there is included polyethylene terephthalate film, polypropylene film, polyethylene film, polystyrene film, or the like, containing titanium dioxide or air bubbles.

In the present embodiment, explanation will be given below on a form where the pressure-sensitive adhesive label main body 21 is provided with the printed layer 22a, however, the printed layer 22a may be substituted with the printed character layer. In addition, it is preferable that the printed layer 22a (or the printed character layer) is formed on the surface of the receiving layer formed in advance (in this case, the receiving layer becomes to be present between the printed layer 22a and the pressure-sensitive adhesive label main body 21). Here, "printing" means the one producing a constant pattern in a large quantity like a marking of the pressure-sensitive adhesive label, and "printing character" means the one producing variable information such as a serial number. A specific form of these printed layer and printed character layer is not especially limited, and conventionally known knowledge maybe referred to appropriately. For example, as a method for forming the printed layer on the surface of the sheet-like substrate, there is included flexographic printing, offset printing, letterpress printing, silk screen printing, or the like, using ink of a color of white, black, yellow, red, blue, gold, silver, pearl or the like. In addition, as a method for forming the printed character layer, there is included thermal transfer system, ink-jet system, electrophotographic (staticelectricity) system, or the like.

As described above, as for the pressure-sensitive adhesive layer (the first pressure-sensitive adhesive layer 13) composing the pressure-sensitive adhesive sheet 10, or the pressure-sensitive adhesive sheet for over-lamination 11, yellowness degree is specified as above, however, as for the pressure-sensitive adhesive layer (the second pressure-sensitive adhesive layer 23) composing the pressure-sensitive adhesive label 20 or the pressure-sensitive adhesive label main body 21, yellowness degree or other specific composition is not especially limited. It should be noted that, in the present embodiment, the second pressure-sensitive adhesive layer 23 should be formed at "the first main surface" side of the second sheet-like substrate.

In the present embodiment, the printed layer 22a may have a region where whiteness degree is 60% or higher. This printed layer 22a is formed at "the second main surface" side of the second sheet-like substrate. This is a preferable form in the case where the second sheet-like substrate has a color other than white. That is, when the second sheet-like substrate is white, the effect of the present embodiment is exerted sufficiently, even when the printed layer 22a having relatively high whiteness degree is not present. On the contrary, in the case where the second sheet-like substrate has a color other than white, this white color is provided as substitution, by providing the printed layer 22a having relatively high whiteness degree. In this case, a visually impressive pattern is expressed by a pattern of a color other than white (ground color of the substrate, other printing) . Here, "whiteness degree" is an index representing whiteness of the printed layer, as measured by ISO whiteness degree in JIS P8148-2001. It should be noted that a specific method for measuring whiteness degree is described in the section of EXAMPLES to be described later. In addition, the scope of the present invention should not be limited only to such a form (a form where whiteness degree of the printed layer 22a is large).

In the present embodiment, the printed layer 22a has "a region having the whiteness degree of 60% or higher" means that a region having the whiteness degree of 60% or higher is present at least in a part of the surface of the printed layer 22a (the surface at the first pressure-sensitive adhesive layer 13 side shown in Fig. 3). However, in view of further exerting the effect of the present invention, the whiteness degree of the above region possessed by the printed layer 22a is preferably 70% or higher, and more preferably 80% or higher. It should be noted that the upper limit value of the whiteness degree is not especially limited, however, it is practically about 99% or lower. In addition, in view of further exerting the effect of the present invention, ratio of an area (area ratio) having the whiteness degree of 60% or higher, occupying in total of the printed layer 22a, is preferably 5% or more, more preferably 10% or more, and still more preferably 50% or more.

It should be noted that, as a method for forming the printed layer 22a, there is included flexographic printing, offset printing, letterpress printing, silk screen printing, or the like.

According to the pressure-sensitive adhesive label of the present embodiment, a similar effect as in the above first embodiment is exerted. That is, such an effect that wavelength of visible light reflected at the interface of a plurality of layers composing the multi-layered laminated polyester film, which composes the first sheet-like substrate, changes when viewing angle is changed, and thus visible color is changed, maybe exerted also in the present embodiment. This is because the above effect is entirely derived from color shift of the reflected light by a polyester film as a composition material of the first sheet-like substrate. Such an effect is exerted significantly in the case where the underground layer of the pressure-sensitive adhesive sheet for over-lamination 11 is white.

It should be noted that explanation was given above in detail on a form where the printed layer is arranged on the surface of the second sheet-like substrate, and a region with a whiteness degree of 60% or higher is present on the surface of the relevant printed layer, with reference to Fig. 3. However, the scope of the present invention should be determined based on the claims and should not be limited only to the embodiment shown in Fig. 3. For example, in the case where the second sheet-like substrate itself is white, it is clear that, even in a form where the printed layer having a white region is not arranged, the effect as described above can be obtained. That is, such a form is also possible that the second sheet-like substrate main body composes the second sheet-like substrate as it is, and the surface of the second sheet-like substrate main body (the second sheet-like substrate) has a region where whiteness degree is 60% or higher. It should be noted that a preferable form of "a region where whiteness degree is 60% or higher" is as explained above with reference to Fig. 3, therefore, detailed explanation thereon is omitted here.

Because the pressure-sensitive adhesive label of the present invention shows the above effect, when the label is applied to a label of various goods and the like, it is possible to furnish aesthetic property which attracts further more consumer's/purchaser's eyes. Such aesthetic property to be furnished is expected to strongly support marketing strategy of the various goods and the like, from the viewpoint of packaging. In addition, according to the form where a printed layer (not shown) is further provided on the top surface of the pressure-sensitive adhesive label, selected use of the printed layer is possible. That is, color tone of the printed layer 22a of the pressure-sensitive adhesive label main body 21 receives an influence by over-lamination with the pressure-sensitive adhesive sheet for over-lamination 11, whereas color tone of the printed layer located at the top surface of the pressure-sensitive adhesive label never receives such an influence. Therefore, as for characters/patterns and the like which have no problems even when influenced by color tone (it may be rather preferable to receive any influence of color tone, depending on the cases), it maybe printed on the printed layer of the pressure-sensitive adhesive label main body 21. On the other hand, as for an emblem such as a logo mark which is better not to be influenced by such color tone, it is preferable to print on the printed layer located at the top surface of the pressure-sensitive adhesive label. Color tone change by the pressure-sensitive adhesive sheet for over-lamination 11 has stronger influence for white color or black color. Therefore, in the case where white color or black color should be conveyed correctly to an observer, such a composition is preferable that patterns of these color tones are located at the top surface of the pressure-sensitive adhesive label.

It should be noted that a specific form of goods and the like of a subject matter, where the pressure-sensitive adhesive sheet or the pressure-sensitive adhesive label of the present invention is applied, is not especially limited, and for example, it may be applied to goods such as foods, cosmetics, name plates, goods requiring tamper-proof and the like.

[A third embodiment]

By the way, the present inventors have found that another additional effect, in addition to the above effect, is exerted, in the case where the pressure-sensitive adhesive sheet of the present invention is stuck to a container for accommodating liquid such as a bottle for cosmetic water or a bottle for beverage or the like. That is, a third embodiment of the present invention is a transparent container stuck with the pressure-sensitive adhesive sheet shown in the first embodiment. In the present embodiment, when a composition material of the container is transparent (colorless and transparent, or colored andtransparent,preferably colorless and transparent), a substance accommodated in the container is confirmed in a form passing through the pressure-sensitive adhesive sheet. In the case where the content is liquid, difference of color tone change may appear between the upper and lower part of the liquid surface, depending on color thereof. That is, by sticking the pressure-sensitive adhesive sheet of the present embodiment at the exterior surface of the container accommodating liquid, function as an indicator to clearly display the residual amount of the content can be furnished to the pressure-sensitive adhesive sheet. It should be noted that this effect is suitably expressed when the content is colored, and in particular, expressed significantly when the content is white or black. In addition, in view of exerting this function as the indicator, it is necessary that the pressure-sensitive adhesive sheet is stuck so as to cover the whole position of the liquid surface, which changes in response to use, among the exterior surface of the transparent container.

EXAMPLES

Explanation will be given below in more detail on the present invention with reference to Examples. However, the scope of the present invention should be determined based on the claims, and should not be limited only to the following Examples.

<Example 1>

As a multi-layered laminated polyester film, ultra multi-layered films: three kinds of Teij in (registered trade mark) Tetoron (registered trade mark) film MLF series: MLF-13.0, MLF-16. 5 andMLF-19. 0 (all produced by Teij in DuPont Films Japan Limited) were prepared.

As for these three kinds of the multi-layered laminated polyester films, spectral reflectance and spectral transmittance in a range of a wavelength of 400 to 700 nm weremeasured. In these measurements, a spectrometer UV-3600, covering UV/visible/near infra red rays, and a multi-purpose large scale sample compartment unit, MPC-3100 (both manufactured by Shimadzu Corp.) were used. In addition, as for spectral reflectance, measurement was performed on light reflected by the film, by injecting light at an angle of 8 degree to the normal line of the main surface of the multi-layered laminated polyester film. In addition, as for spectral transmittance, measurement was performed on light transmitted by the film, by injecting light at an angle of 0 degree to the normal line of the main surface of the multi-layered laminated polyester film. It should be noted that reason for injection of light at an angle of 8 degree instead of 0 degree to the normal line (that is with a little shift from the normal line), for spectral reflectance, is because injection of light at an angle of 0 degree results in mirror reflection to a light source, and makes impossible to detect reflected light.

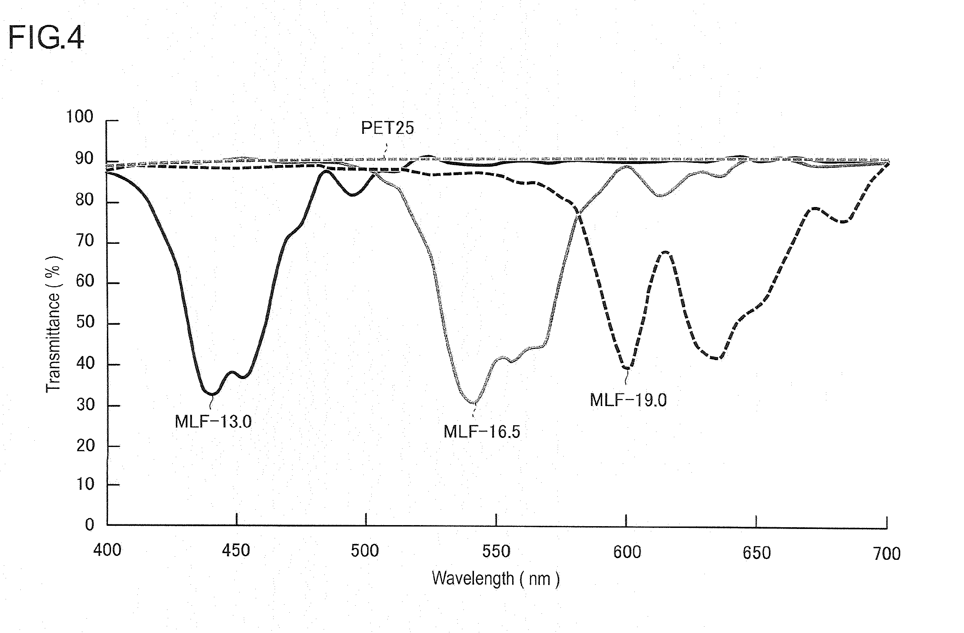

For these results, the result of spectral reflectance is shown in Fig. 2, and the result of spectral transmittance is shown in Fig. 4. In addition, these results are shown in the following Table 1 as summary. It should be noted that "PET25" shown in Fig.2 and Fig. 4 means the result of similar measurement performed on Lumirror (registered trade mark) T-60 (produced by Toray Industries, Inc.) (thickness: 25 μm), which is a transparent single-layered polyester film. As shown in Fig. 2 and Fig. 4, in "PET25", there was no detection of selective reflection or transmission of light.

[Table 1]

| Multi-layered film | Reflection range (nm) | Color of reflected light | Color of transmitted light (complementary color of reflected light) |
|---|---|---|---|
| MLF-13.0 | 400 to 480 | Blue | Yellow |
| MLF-16.5 | 480 to 580 | Green | Reddish purple |
| MLF-19.0 | 580 to 680 | Red | Blueish green |

As shown in Fig. 2 and Table 1, in MLF-13. 0, as a result of reflection of a wavelength of 400 to 480 nm, reflected light showed blue and transmitted light showed yellow, which is the complementary color of blue. In addition, inMLF-16. 5, as a result of reflection of a wavelength of 480 to 580 nm, reflected light showed green and transmitted light showed reddish purple, which is the complementary color of green. Still more in MLF-19.0, as a result of reflection of a wavelength of 580 to 680 nm, reflected light showed red and transmitted light showed bluish green, which is the complementary color of red.

<Production Example 1>

Using a reaction apparatus equipped with a thermometer, a stirrer, a reflux condenser tube, and a nitrogen gas introduction tube, 60 parts by mass of 2-ethylhexyl acrylate, 10 parts by mass of butyl acrylate, 27 parts by mass of vinyl acetate, 3 parts by mass of acrylic acid, and 200 parts by mass of ethyl acetate were charged, and 0.3 part by mass of azobisisobutyronitrile was added for polymerization at 80°C for 8 hours under nitrogen gas atmosphere. After completion of the reaction, solid content was adjusted at 32% by mass with toluene to obtain a solution of a pressure-sensitive adhesive agent composed of an acrylic-type copolymer with a weight average molecular weight of 700,000. Into this solution, 2 parts by mass of alminum chelate-type cross-linking agent (produced by Soken Chemical engineering Co., Ltd; trade name: "M-5A": aluminum tris acetyl acetonate: a solid content of 4.95% by mass), relative to 100 parts by mass of the solution of the acrylic-type pressure-sensitive adhesive agent, was added and mixed to obtain a pressure-sensitive adhesive agent (1).

<Production Example 2>

A pressure-sensitive adhesive agent (2) was obtained by a similar method as in the above Production Example 1, except that 2 parts by mass of an aromatic isocyanate-type cross-linking agent (produced by Nippon Polyurethane Industry Co., Ltd; trade name: "Coronate (registered trade mark)-L"; an adduct form of toluylene diisicyanate and trimethlol propane) was added and mixed to the solution of the acrylic-type pressure-sensitive adhesive agent, instead of the acrylic-type pressure-sensitive adhesive agent.

<Example 2-1>

As a first sheet-like substrate, the pressure-sensitive adhesive agent (1) obtained in the above Production Example 1 was coated on one surface of the multi-layered laminated polyester film, Teijin (registered trade mark) Tetoron (registered trade mark) film: MLF-13.0 (produced by Teijin DuPont Films Japan Limited), to form the first pressure-sensitive adhesive layer (thickness: 20 μm), and then releasing paper 7LK (produced by Lintec Corp.) was stuck as a release sheet to obtain a pressure-sensitive adhesive sheet for over-lamination.

<Example 2-2>

A pressure-sensitive adhesive sheet for over-lamination was obtained similarly as in Example 2-1 except that the multi-layered laminated polyester film, Teijin (registered trade mark) Tetoron (registered trade mark) film: MLF-16.5 was used as the first sheet-like substrate.

<Example 2-3>

A pressure-sensitive adhesive sheet for over-lamination was obtained similarly as in Example 2-1 except that the multi-layered laminated polyester film, Teijin (registered trade mark) Tetoron (registered trade mark) film: MLF-19.0 was used as the first sheet-like substrate.

<Comparative Example 1>

A pressure-sensitive adhesive sheet for over-lamination was obtained similarly as in Example 2-1 except that Lumilar (registered trade mark) T-60 (produced by Toray Industries, Inc.), which is a transparent single-layered polyester film, was used as the first sheet-like substrate.

<Comparative Example 2>

A pressure-sensitive adhesive sheet for over-lamination was obtained similarly as in Example 2-1 except that the pressure-sensitive adhesive agent (2) obtained in Production Example 2 was used instead of the pressure-sensitive adhesive agent (1).

<Evaluation Example>

(Color change 1: Color change of light reflecting at the surface of the first sheet-like substrate)

From the pressure-sensitive adhesive sheets for over-lamination produced in the above Examples 2-1 to 2-3, and Comparative Example 1, each of the release sheets was peeled off, and the pressure-sensitive adhesive sheet was stuck onto the surface of the second sheet-like substrate of a pressure-sensitive adhesive label main body, having a whiteness degree of the surface of the second sheet-like substrate of 93%, PETWH50 (A) PAT1 8LK (produced by Lintec Corp.), to obtain a pressure-sensitive adhesive label.
For each of the obtained pressure-sensitive adhesive labels, color change of an image of a fluorescent lamp displayed on the surface of the first sheet-like substrate of the pressure-sensitive adhesive sheet for over-lamination was observed by the following method.
Position of the pressure-sensitive adhesive label was adjusted so that light of a fluorescent lamp is injected from an angle of 8 degree to the normal line of the surface of the pressure-sensitive adhesive label, under a three-wavelength-type fluorescent lamp, having emission peaks at a wavelengths of 450 nm, 540 nm and 610 nm, to observe color tone of the fluorescent lamp displayed, from the display angle (8 degree) of the image of the fluorescent lamp.
In addition, similarly, position of the pressure-sensitive adhesive label was adjusted so that light is injected from an angle of 45 degree to the normal line of the surface of the pressure-sensitive adhesive label to observe color tone of the image of the fluorescent lamp displayed. The results are shown in the following Table 2 (Color change 1).

(Color change 2: Color change of light reflecting at the surface of the second sheet-like substrate)

For each of the obtained pressure-sensitive adhesive labels produced above, color change of light passing through the first sheet-like substrate of the pressure-sensitive adhesive sheet for over-lamination, and reflecting at the surface of the second sheet-like substrate with a whiteness degree of 93% was observed by the following method.
Position of the pressure-sensitive adhesive label was adjusted so that light of a fluorescent lamp is injected from an angle of 8 degree to the normal line of the surface of the pressure-sensitive adhesive label, under a three-wavelength-type fluorescent lamp, having emission peaks at a wavelengths of 450 nm, 540 nm and 610 nm, to observe color tone of light reflecting at the surface of the second sheet-like substrate, from an angle a little shifted from the display angle (8 degree) of the image of the fluorescent lamp.

In addition, similarly, position of the pressure-sensitive adhesive label was adjusted so that light is injected from an angle of 45 degree to the normal line of the surface of the pressure-sensitive adhesive label to observe color tone of light reflecting at the surface of the second sheet-like substrate. The results are shown in the following Table 2 (Color change 2).

[Table 2]

| Pressure-sensitive adhesive sheet for over-lamination | First sheet-like substrate | First Pressure-sensitive adhesive layer | Color change 1 | | Color change 2 | |
|---|---|---|---|---|---|---|
| | | | 8 degree | 45 degree | 8 degree | 45 degree |
| Example 2-1 | MLF-13.0 | A | Blue | White | Yellow | White |
| Example 2-2 | MLF-16.5 | A | Green | Blue | Reddish purple | Yellow |
| Example 2-3 | MLF-19.0 | A | Red | Green | Blueish green | Reddish purple |
| Comparative Example 1 | Lumirror T-60 | A | White | White | White | White |

As shown in Table 2, it is understood that color to be observed changes by change of the incident angle of light and change of viewing angle. In this way, according to the pressure-sensitive adhesive sheet (pressure-sensitive adhesive label) of the present invention, such further astonishing effect is obtained that the color tone of light reflecting at the surface of the second sheet-like substrate differs from the color tone of light reflecting at the surface of the first sheet-like substrate, when the viewing angle is different, as well as the color tone of light reflecting at the surface of the first sheet-like substrate, and the color tone of light reflecting at the surface of the second sheet-like substrate each changes, when the incident angle of light changes.

(Yellowness degree of the pressure-sensitive adhesive sheet for over-lamination)

The pressure-sensitive adhesive sheet for over-laminations, obtained in Examples 2-1, Comparative Example 1 and Comparative Example 2, were subjected to accelerated heating at an environment of 70°C for 10 days. After that, a release sheet was peeled off from each of the pressure-sensitive adhesive sheets to measure yellowness degree YI by a transmission method, as defined in JIS K7105-1981. Results thereof are shown in the following Table 3.

(Color change 3)

The pressure-sensitive adhesive sheet for over-laminations, obtained in Examples 2-1, Comparative Example 1 and Comparative Example 2, were subjected to accelerated heating at an environment of 70°C for 10 days. After that, from each of the pressure-sensitive adhesive sheet, a release sheet was peeled off and stuck onto the surface of the second sheet-like substrate of the pressure-sensitive adhesive label main body, having a whiteness degree of the surface of the second sheet-like substrate of 93%, PETWH50 (A) PAT1 8LK to obtain a pressure-sensitive adhesive label.

Position of the pressure-sensitive adhesive label was adjusted so that light of a fluorescent lamp is injected from an angle of 8 degree to the normal line of the surface of the pressure-sensitive adhesive label, under a three-wavelength-type fluorescent lamp, having emission peaks at a wavelengths of 450 nm, 540 nm and 610 nm, to observe the color tone of light reflecting at the surface of the second sheet-like substrate, from an angle a little shifted from the display angle (8 degree) of the image of the fluorescent lamp.

In addition, similarly, position of the pressure-sensitive adhesive label was adjusted so that light is injected from an angle of 45 degree to the normal line of the surface of the pressure-sensitive adhesive label to observe the color tone of light reflecting at the surface of the second sheet-like substrate.

These results are shown in the following Table 3 (Color change 3).

[Table 3]

| | First sheet-like substrate | First Pressure-sensitive adhesive layer | Yellowness degree of pressure-sensitive adhesive sheet | Color change 3 | |
| --- | --- | --- | --- | --- | --- |
| | | | | 8 degree | degree |
| Example 2-1 | MLF-13.0 | A | 2.5 | Yellow | White |
| Comparative Example 1 | Lumirror T-60 | A | 1.8 | White | White |
| Comparative Example 2 | MLF-13.0 | B | 4.1 | Yellow | Yellow |

As shown in Table 3, by using a metal chelating compound as a cross-linking agent of a pressure-sensitive adhesive agent, and setting a yellowness degree of 3.0 or lower, of a pressure-sensitive adhesive layer composing the pressure-sensitive adhesive sheet, such performance can be exerted that the color tone of light reflecting at the surface of the second sheet-like substrate changes by incident angle of light. This performance is exerted significantly in the case where the surface of the second sheet-like substrate or a printed layer arranged on the surface thereof has a region with a whiteness degree of 60% or higher.

Because the pressure-sensitive adhesive sheet (the pressure-sensitive adhesive label) of the present invention shows such an effect, when the sheet (label) is applied to a label of various goods and the like, it is possible to furnish aesthetic property which attracts further more consumer's/purchaser's eyes. Such aesthetic property to be furnished is expected to strongly support marketing strategy of the various goods and the like, from the viewpoint of packaging.

DESCRIPTION OF REFERENCE NUMERALS

10 Pressure-sensitive adhesive sheet
11 Pressure-sensitive adhesive sheet main body (pressure-sensitive adhesive sheet for over-lamination)
12 First sheet-like substrate
13 First pressure-sensitive adhesive layer
14, 24 Release sheet
20 Pressure-sensitive adhesive label
21 Pressure-sensitive adhesive label main body
22 Second sheet-like substrate
22a Printed layer
22b Second sheet-like substrate main body
23 Second pressure-sensitive adhesive layer

**Claims**

1.  A pressure-sensitive adhesive sheet comprising:

    a first sheet-like substrate comprised of a multi-layered laminated polyester film; and
    a first pressure-sensitive adhesive layer, arranged on one surface of the first sheet-like substrate, comprising a pressure-sensitive adhesive agent, and having a yellowness degree measured by JIS K7105-1981 of 3.0 or lower.

2.  The pressure-sensitive adhesive sheet according to claim 1, wherein the pressure-sensitive adhesive agent comprises a base polymer comprised of a (meth)acrylate ester-based (co)polymer, and one or more cross-linking agent selected from the group consisting of an aliphatic isocyanate compound, an alicyclic isocyanate compound, an epoxy compound, and a metal chelating compound.

3.  The pressure-sensitive adhesive sheet according to claim 1 or 2, wherein wavelength showing a reflectance of 30% or higher, in a spectral reflectance curve in a wavelength range of 400 to 700 nm, of the multi-layered laminated polyester film, is in the range of 400 to 480 nm.

4. The pressure-sensitive adhesive sheet according to claim 1 or 2, wherein wavelength showing a reflectance of 30% or higher, in a spectral reflectance curve in a wavelength range of 400 to 700 nm, of the multi-layered laminated polyester film, is in the range of 480 to 580 nm.

5. The pressure-sensitive adhesive sheet according to claim 1 or 2, wherein wavelength showing a reflectance of 30% or higher, in a spectral reflectance curve in a wavelength range of 400 to 700 nm, of the multi-layered laminated polyester film, is in the range of 580 to 680 nm.

6. The pressure-sensitive adhesive sheet according to any one of claims 1 to 5, wherein a transparent receiving layer is further laminated on the surface of the first sheet-like substrate opposite to the first pressure-adhesive layer.

7. The pressure-sensitive adhesive sheet according to any one of claims 1 to 6, wherein a release sheet is further laminated on the surface of the first pressure-sensitive adhesive layer opposite to the first sheet-like substrate.

8. A pressure-sensitive adhesive label comprising:

   a second sheet-like substrate having a first and a second main surfaces; and
   a second pressure-sensitive adhesive layer arranged at the first main surface of the second sheet-like substrate, and comprising a pressure-sensitive adhesive agent;
   wherein the first pressure-sensitive adhesive layer of the pressure-sensitive adhesive sheet according to any one of claims 1 to 6 is laminated on the second main surface of the second sheet-like substrate.

9. The pressure-sensitive adhesive label according to claim 8, wherein the second main surface of the second sheet-like substrate has a region with a whiteness degree measured by JIS P8148-2001 of 60% or higher.

10. The pressure-sensitive adhesive label according to claim 8 or 9, wherein a printed layer with a whiteness degree measured by JIS P8148-2001 of 60% or higher is provided on the second main surface of the second sheet-like substrate.

11. The pressure-sensitive adhesive label according to any one of claims 8 to 10, wherein a release sheet is further laminated on the surface of the second pressure-sensitive adhesive layer opposite to the second sheet-like substrate.

FIG.1

10

12
11
13
14

# FIG.2

FIG.3

FIG.4

EP 2 418 261 A1

## INTERNATIONAL SEARCH REPORT

| | International application No. |
|---|---|
| | PCT/JP2010/053121 |

**A. CLASSIFICATION OF SUBJECT MATTER**
*C09J7/02*(2006.01)i, *B32B27/36*(2006.01)i, *C09J11/06*(2006.01)i, *C09J133/04* (2006.01)i

According to International Patent Classification (IPC) or to both national classification and IPC

**B. FIELDS SEARCHED**

Minimum documentation searched (classification system followed by classification symbols)
C09J1/00-201/10, B32B1/00-35/00

Documentation searched other than minimum documentation to the extent that such documents are included in the fields searched
Jitsuyo Shinan Koho      1922-1996    Jitsuyo Shinan Toroku Koho    1996-2010
Kokai Jitsuyo Shinan Koho   1971-2010    Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-509041 A (Minnesota Mining & Manufacturing Co.), 26 March 2002 (26.03.2002), claims; paragraphs [0013], [0018], [0039], [0040], [0067], [0074], [0088] to [0108] & US 6045894 A      & US 6788463 B2 & US 2005/0019530 A1   & US 2009/0155540 A1 & EP 1047549 A1      & WO 1999/036257 A1 & DE 69812713 T      & AU 1818499 A & BR 9813893 A       & AU 737168 B & CA 2317551 A       & ES 2196642 T | 1-11 |
| Y | WO 2008/123334 A1 (Lintec Corp.), 16 October 2008 (16.10.2008), page 3, line 28 to page 7, line 1; page 17, lines 18 to 30; page 21, table 1 & JP 2008-248131 A | 1-11 |

☒ Further documents are listed in the continuation of Box C.     ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 07 May, 2010 (07.05.10) | 18 May, 2010 (18.05.10) |

| Name and mailing address of the ISA/<br>   Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2010/053121 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-197310 A  (Sumitomo Chemical Co., Ltd.), 28 August 2008 (28.08.2008), paragraphs [0056], [0082], [0088] (Family: none) | 1-11 |
| Y | JP 2008-143028 A  (Kimoto Co., Ltd.), 26 June 2008 (26.06.2008), claims; paragraphs [0020] to [0024]; fig. 1 to 17 (Family: none) | 1-11 |

Form PCT/ISA/210 (continuation of second sheet) (July 2009)

**EP 2 418 261 A1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004083837 A
- JP 2005059332 A